# FASCICULE DE BREVET EUROPEEN

(11) **EP 3 328 668 B1**
(45) Date de publication et mention de la délivrance du brevet: **16.10.2019**
(21) Numéro de dépôt: 16741087.7
(22) Date de dépôt: 17.06.2016
(51) Int. Cl.: B60G 17/0165, B60G 17/06, B60W 40/06, B60W 50/00

(54) **DISPOSITIF POUR ESTIMER UN INDICATEUR D'ÉTAT D'UNE VOIE DE CIRCULATION EMPRUNTÉE PAR UN VÉHICULE TERRESTRE**
VORRICHTUNG ZUR SCHÄTZUNG EINES INDIKATORS DES ZUSTANDES EINES VON EINEM LANDFAHRZEUG GEWÄHLTEN VERKEHRSWEGES
DEVICE FOR ESTIMATING AN INDICATOR OF THE STATE OF A TRAFFIC ROUTE TAKEN BY A LAND VEHICLE

(30) Priorité: 28.07.2015 FR 1557187
(43) Date de publication de la demande: 06.06.2018
(73) Titulaire: PSA AUTOMOBILES S.A., 78300 Poissy (FR)
(72) Inventeur: BARALE, Stephane, 92130 Issy les Moulineaux (FR); BOURDAUDUCQ, Thomas, 91300 Massy (FR); RIZZO, Audrey, 92150 Suresnes (FR)
(74) Mandataire: Fernandez, Francis Lionel
(86) Numéro de dépôt international: PCT/FR2016/051479
(87) Numéro de publication internationale: WO 2017/017321

(56) Documents cités:
- EP-A2- 0 556 070
- DE-A1-102011 120 022
- FR-A1- 2 832 801
- FR-A1- 3 011 793

## Description

L'invention concerne les véhicules terrestres pouvant circuler sur des voies de circulation, et plus précisément la détermination de l'état de ces voies de circulation.

Le document FR3011793 montre un dispositif d'analyse de l'état de voie de circulation selon le préambule de la revendication 1.

Certains véhicules terrestres, généralement de type automobile, comprennent un système de suspension pilotée utilisant un algorithme chargé de pondérer les différentes fonctions qu'il offre en fonction d'un indicateur représentatif de l'état de la voie de circulation empruntée. Cet indicateur permet plus précisément de moduler le niveau d'amortissement qui est appliqué au véhicule ou à certaines au moins de ses roues en fonction de sa valeur en cours.

Il existe au moins deux façons pour estimer ce type d'indicateur.

Une première façon consiste à observer les débattements (par exemple des suspensions avant) filtrés sur deux zones afin d'estimer un niveau de tressautement et un niveau de trépidations. Cela permet de caractériser de manière différenciée tous les types de voie de circulation. Cependant, le calcul étant uniquement proportionnel, il n'offre pas d'adaptativité à la voie de circulation avec une cartographie fonction de l'état de cette voie de circulation, et de surcroît ne permet pas d'anticipation.

Une seconde façon consiste à construire un indicateur booléen bonne/mauvaise voie de circulation en fonction de la vitesse de débattement d'un essieu (par exemple celui situé à l'avant). Cela permet de faire ressortir correctement les sollicitations, telles que les tressautements, qui sont fréquentes sur les mauvaises voies de circulation. Cependant, cela ne permet pas de prendre en compte les hautes fréquences (caractéristiques des trépidations et des rebonds) et les basses fréquences dans le calcul de l'indicateur d'état. De plus, ce dernier étant binaire (bonne voie de circulation / mauvaise voie de circulation), il ne permet une action que sur deux états avec le compromis résultant et ne permet pas d'anticipation.

D'une manière générale, soit l'indicateur d'état s'avère peu performant du fait d'une mauvaise corrélation avec l'état réel de la voie de circulation empruntée, soit la détermination de l'indicateur d'état est trop lente et donc induit un pilotage peu réactif, soit la détermination de l'indicateur d'état est suffisamment rapide mais trop couteuse en termes de ressources de calcul, soit encore la mise au point de cet indicateur d'état s'avère trop complexe du fait qu'elle repose sur un long temps d'exploitation consécutivement à une formulation insuffisamment physique.

L'invention a donc notamment pour but d'améliorer la situation, grâce à une détermination des sollicitations induites par la voie de circulation, de manière à permettre un pilotage optimum du système de suspension propre à améliorer le confort des passagers et le compromis confort/comportement.

Elle propose notamment à cet effet un dispositif d'analyse, destiné à équiper un véhicule terrestre propre à circuler sur une voie de circulation et comprenant une structure de support de passager(s), et comportant des moyens de traitement agencés pour estimer au moins une fréquence prépondérante fₚ dans au moins un signal Z(t) qui est représentatif d'excitations de cette structure à un instant t, puis pour déterminer une valeur d'un indicateur représentatif d'un état de la voie de circulation en fonction d'au moins cette fréquence prépondérante fₚ estimée.

Ainsi, l'indicateur d'état est non seulement précis et réactif, mais également simple dans son format et dans son utilisation.

Le dispositif d'analyse selon l'invention peut comporter d'autres caractéristiques qui peuvent être prises séparément ou en combinaison, et notamment :
- ses moyens de traitement peuvent être agencés pour assimiler chaque signal Z(t) associé à un instant t à une fonction égale au produit d'une amplitude par une sinusoïde mono-fréquentielle ayant une variable égale au produit de cet instant t par une pulsation ω proportionnelle à une fréquence prépondérante fₚ, et pour déterminer la pulsation ω de chaque signal Z(t) en calculant la racine carrée du module d'un rapport entre une dérivée seconde du signal Z(t) par rapport au temps et ce signal Z(t) ; 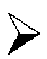 ses moyens de traitement peuvent être agencés, d'une première part, pour associer à chaque (la) fréquence prépondérante fₚ estimée pour un même instant t un coefficient ayant une valeur fonction de son positionnement par rapport à au moins deux seuils prédéfinis, parmi lesquels un premier seuil est égal à une haute fréquence et un deuxième seuil est strictement inférieur au premier seuil et égal à une basse fréquence, d'une deuxième part, pour calculer une valeur moyenne de valeurs de coefficient associées à chaque fréquence prépondérante fₚ associée à cet instant t, et, d'une troisième part, pour déterminer la valeur de l'indicateur associée à cet instant t en calculant une intégrale de cette valeur moyenne, éventuellement préalablement pondérée par un coefficient de sensibilité, puis en normalisant le résultat de cette intégrale par une valeur prédéfinie ou en saturant le résultat de cette intégrale, de manière à obtenir un résultat compris entre zéro et un ;
   - ses moyens de traitement peuvent être agencés pour associer une première valeur de coefficient positive choisie à chaque fréquence prépondérante fₚ estimée et supérieure au premier seuil, une deuxième valeur de coefficient négative choisie à chaque fréquence prépondérante fₚ estimée et comprise entre les deuxième et premier seuils, et une troisième valeur de coefficient négative choisie, strictement inférieure à la deuxième valeur négative choisie, à chaque fréquence prépondérante fₚ estimée et inférieure au deuxième seuil ;
- les signaux Z(t) peuvent être choisis parmi (au moins) des premiers signaux représentatifs d'un profil de la voie de circulation et acquis dans une zone située devant le véhicule terrestre, des deuxièmes signaux représentatifs d'un débattement d'un endroit choisi d'au moins une roue du véhicule terrestre, et des troisièmes signaux représentatifs d'un débattement d'au moins une suspension associée à une roue du véhicule terrestre ;
   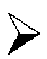 ses moyens de traitement peuvent être agencés pour déduire les deuxièmes signaux soit des premiers signaux, soit de signaux primaires acquis par des deuxièmes moyens d'acquisition que comprend le véhicule terrestre ;
   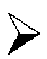 ses moyens de traitement peuvent être agencés pour déduire les troisièmes signaux soit des premiers signaux, soit de signaux primaires acquis par des troisièmes moyens d'acquisition que comprend le véhicule terrestre.

L'invention propose également un véhicule terrestre, éventuellement de type automobile, propre à circuler sur une voie de circulation, et comprenant une structure de support de passager(s) et un dispositif d'analyse du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule terrestre équipé d'un dispositif d'analyse selon l'invention,
- la figure 2 illustre schématiquement au sein d'un diagramme l'évolution temporelle des déplacements (dr (en mètre)) de roues avant droite (C1), avant gauche (C2), arrière droite (C3) et arrière gauche (C4) d'un véhicule terrestre, et
- la figure 3 illustre schématiquement au sein d'un diagramme l'évolution temporelle d'un indicateur d'état obtenu par un dispositif d'analyse selon l'invention en présence des exemples de déplacement de la figure 2.

L'invention a notamment pour but de proposer un dispositif d'analyse DA destiné à équiper un véhicule terrestre VT propre à circuler sur une voie de circulation VC, et comprenant une structure de support de passager(s).

Dans ce qui suit, on considère, à titre d'exemple non limitatif, que le véhicule terrestre VT est de type automobile. Il s'agit par exemple d'une voiture. Mais l'invention n'est pas limitée à ce type de véhicule terrestre. Elle concerne en effet tout type de véhicule terrestre pouvant circuler sur des voies de circulation et comprenant une structure de support de passager(s). Ainsi, elle concerne également et notamment les motocyclettes, les véhicules utilitaires, les cars (ou bus), les camions, les engins de voirie, les trains, les tramways, les métros, les engins agricoles et les engins de chantier

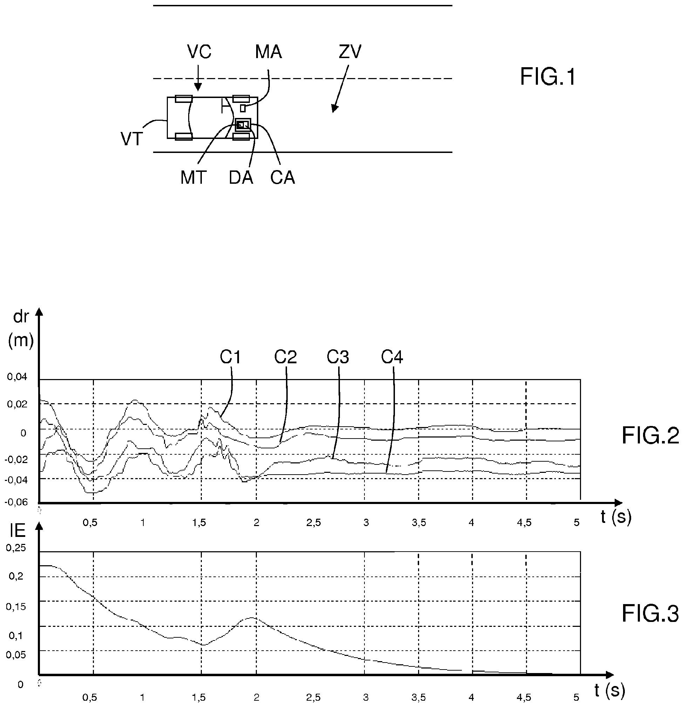

On a schématiquement représenté sur la figure 1 un exemple de véhicule terrestre VT, ici de type automobile, circulant sur une voie de circulation VC. Bien que cela ne soit pas illustré, ce véhicule terrestre VT comprend une structure de support de passager(s) qui se présente ici sous la forme d'une caisse à laquelle sont couplées des roues avant et arrière via des suspensions pilotées.

Le pilotage des suspensions se fait en fonction d'un indicateur d'état IE qui est estimé par un dispositif d'analyse DA selon l'invention.

Ce dispositif d'analyse DA peut, comme illustré non limitativement sur la figure 1, être implanté dans un calculateur embarqué CA, qui assure éventuellement au moins une autre fonction au sein de son véhicule (terrestre) VT. Par exemple, ce calculateur CA peut être l'ordinateur de bord du véhicule VT, et d'une manière générale n'importe quel calculateur hébergeur d'au moins une quelconque fonction, embarqué dans le véhicule de façon permanente ou temporaire (comme par exemple un téléphone intelligent ou une tablette électronique), et capable d'effectuer des calculs dans le timing adéquat et de restituer de façon adéquate une valeur d'indicateur d'état à un calculateur de pilotage de la suspension du véhicule VT. Mais dans une variante de réalisation, le dispositif d'analyse DA pourrait constituer un équipement électronique embarqué, comme par exemple un calculateur. Par conséquent, le dispositif d'analyse DA peut être réalisé sous la forme de modules logiciels (ou informatiques ou encore « software »), ou bien d'une combinaison de circuits électroniques (ou « hardware ») et de modules logiciels.

Comme illustré, un dispositif d'analyse DA comprend principalement des moyens de traitement MT qui sont tout d'abord agencés pour estimer au moins une fréquence prépondérante fₚ dans au moins un signal Z(t) qui est représentatif d'excitations de la structure (de support) à un instant t.

Les signaux Z(t) peuvent être déterminés de façon légèrement anticipée ou en temps réel.

Par exemple, il peut s'agir de premiers signaux qui sont représentatifs d'un profil de la voie de circulation VC et qui sont acquis dans une zone ZV située devant le véhicule VT, par exemple par des premiers moyens d'acquisition que comprend ce dernier (VT). Ces premiers moyens d'acquisition peuvent par exemple comprendre au moins un système optique (comme par exemple une caméra, ou un laser de balayage, ou un Lidar) ou phonique (par exemple ultrasons) installé dans une partie avant du véhicule VT ou dans un véhicule tiers placé devant le véhicule VT. Dans une variante, les premiers signaux peuvent être fournis par une base de données en fonction de la position connue du véhicule VT (la base de données pouvant elle-même être renseignée par le véhicule VT ou par un véhicule qui précède ce dernier (VT) de façon anticipée). On comprendra que dans ce cas les premiers signaux sont acquis de façon anticipée.

En variante ou en complément, il peut s'agir de deuxièmes signaux qui sont représentatifs d'un débattement d'un endroit choisi d'au moins une roue du véhicule VT. Cet endroit choisi est par exemple le centre d'une roue. On notera que dans ce cas les deuxièmes signaux peuvent être déduits soit de premiers signaux acquis de façon anticipée, soit de signaux primaires acquis en temps réel par des deuxièmes moyens d'acquisition MA que comprend le véhicule terrestre VT. Ces deuxièmes moyens d'acquisition MA peuvent par exemple comprendre au moins un accéléromètre, ou un capteur de débattement, ou un capteur de déformation associé à la roue et associé ou non à un accéléromètre, ou bien encore un capteur de pression ou un capteur de contrainte dès lors que les fluctuations fréquentielles sont corrélables au profil de la voie de circulation VC.

On a schématiquement illustré dans le diagramme de la figure 2, l'évolution temporelle (t) des déplacements (ou débattements) dr respectifs de la roue avant droite d'un véhicule terrestre (courbe C1), de la roue avant gauche de ce véhicule terrestre (courbe C2), de la roue arrière droite de ce véhicule terrestre (courbe C3), et de la roue arrière gauche de ce véhicule terrestre (courbe C4). Ces déplacements ont ici été obtenus au moyen de capteurs de débattement couplés aux différentes roues d'un véhicule terrestre.

Egalement en variante ou en complément, il peut s'agir de troisièmes signaux qui sont représentatifs d'un débattement d'au moins une suspension associée à une roue du véhicule VT. On notera que dans ce cas les troisièmes signaux peuvent être déduits soit de premiers signaux acquis de façon anticipée, soit de signaux primaires acquis en temps réel par des troisièmes moyens d'acquisition que comprend le véhicule terrestre VT. Ces troisièmes moyens d'acquisition peuvent par exemple comprendre au moins un accéléromètre ou un capteur de débattement, associé ou non à un accéléromètre, ou bien encore un capteur de pression ou un capteur de contrainte dès lors que les fluctuations fréquentielles sont corrélables au profil de la voie de circulation VC.

On notera que les moyens de traitement MT peuvent éventuellement utiliser des premiers signaux et/ou des deuxièmes signaux et/ou des troisièmes signaux, éventuellement après les avoir filtrés afin de rejeter ceux qui sont a priori aberrants. Par ailleurs, les moyens de traitement MT peuvent éventuellement utiliser des deuxièmes signaux provenant d'au moins deux sources (par exemple deux capteurs de débattement associés à deux roues) et/ou des troisièmes signaux provenant d'au moins deux sources (par exemple deux capteurs de débattement associés à deux suspensions).

On notera également que les moyens de traitement MT peuvent être agencés pour assimiler chaque signal Z(t) associé à un instant t à une fonction qui est égale au produit d'une amplitude A₀ par une sinusoïde mono-fréquentielle ayant une variable égale au produit de cet instant t par une pulsation ω proportionnelle à une fréquence prépondérante fₚ. On a alors Z(t) = A₀^{∗}sin(ωt) ou bien Z(t) = A₀^{∗}cos(ωt), avec ω = 2π^{∗}fₚ. Dans ce cas, les moyens de traitement MT sont agencés pour commencer par déterminer la pulsation ω de chaque signal Z(t) en calculant la racine carrée du module d'un rapport entre une dérivée seconde du signal Z(t) par rapport au temps (d²Z(t)/dt = - A₀^{∗}ω^{2∗}sin(ωt) ou bien d²Z(t)/dt = - A₀^{∗}ω^{2∗}cos(ωt)) et ce signal Z(t), soit ω = [|(d²Z(t)/dt)/Z(t)1]^{1/2}. Puis, les moyens de traitement MT sont agencés pour estimer la fréquence prépondérante fₚ de la pulsation ω déterminée pour l'instant t considéré (fₚ = ω/2π).

Une fois que les moyens de traitement MT ont estimé la fréquence prépondérante fₚ associée à un instant t, ils sont agencés pour déterminer une valeur d'un indicateur IE représentatif d'un état de la voie de circulation VC en fonction d'au moins cette fréquence prépondérante fₚ estimée.

A titre d'exemple, les moyens de traitement MT peuvent être agencés pour associer à chaque (la) fréquence prépondérante fₚ estimée pour un instant t, un coefficient v_{cf}(fₚ) de pondération, ayant une valeur qui est fonction de son positionnement par rapport à au moins deux seuils prédéfinis. Ces seuils comprennent au moins un premier seuil S1 égal à une haute fréquence et un deuxième seuil S2 strictement inférieur au premier seuil (soit S2 < S1) et égal à une basse fréquence. Par exemple, on peut choisir S1 = 4 Hz (par exemple 3 Hz < S1 < 5 Hz) et S2 = 2,5 Hz (par exemple 2 Hz < S2 < 4 Hz).

Ensuite, les moyens de traitement MT peuvent être agencés pour calculer une valeur moyenne vm(v_{cf}(fₚ)) de valeurs de coefficient associées à chaque fréquence prépondérante fₚ associée à cet instant t. On comprendra qu'en présence d'une unique fréquence prépondérante fₚ associée à un instant t la valeur moyenne vm(v_{cf}(fₚ)) est égale à v_{cf}(fₚ). Le calcul de la valeur moyenne est utile en présence de plusieurs signaux Z(t) d'origines différentes, car il permet de réaliser un auto-filtre. En effet, si une valeur de coefficient résultant d'un signal Z(t) correspond à une sollicitation violente du fait d'un défaut local isolé du profil de la voie de circulation VC, les autres valeurs de coefficient résultant des autres signaux Z(t) vont la pondérer et empêcheront de considérer qu'il y a une dégradation de la voie de circulation VC. Dans le cas de l'utilisation d'un capteur optique ou phonique (par exemple), il n'y a pas de roue au sens propre, mais les roues sont « fonctionnellement » reconstituées par une lecture de l'information localisée géométriquement au point de passage en latéral (droite/gauche) et temporellement par un décalage (avant/arrière) ; l'information avant est reportée à l'arrière avec le décalage temporel fonction de la vitesse du véhicule VT et de son empattement.

On notera qu'en variante, il est possible d'effectuer la valeur moyenne des produits (v_{cf}(fₚ)^{∗}fₚ)), mais cela s'avère moins facile à manipuler.

Egalement à titre d'exemple, les moyens de traitement MT peuvent être agencés pour utiliser trois valeurs de coefficient v_{cf}(fₚ). Une première valeur de coefficient positive choisie v_{cf1} peut être associée à chaque fréquence prépondérante fₚ estimée et supérieure au premier seuil S1. Une deuxième valeur de coefficient négative choisie v_{cf2} peut être associée à chaque fréquence prépondérante fₚ estimée et comprise entre les deuxième S2 et premier S1 seuils (soit v_{cf2} < v_{cf1}). Une troisième valeur de coefficient négative choisie v_{cf3}, strictement inférieure à la deuxième valeur négative choisie v_{cf2}, peut être associée à chaque fréquence prépondérante fₚ estimée et inférieure au deuxième seuil S2 (soit v_{cf3} < v_{cf2}). Par exemple, on peut avoir v_{cf1} = 13, v_{cf2} = -0,05, et v_{cf3} = -5. On notera que l'on pourrait utiliser plus de trois valeurs de coefficient v_{cf} à associer aux différentes fréquences prépondérantes fₚ estimées.

Une fois que les moyens de traitement MT ont déterminé une valeur moyenne vm associée à un instant t, ils peuvent être agencés pour déterminer la valeur de l'indicateur d'état IE associée à cet instant t en calculant une intégrale de cette valeur moyenne vm, puis en normalisant le résultat de cette intégrale par une valeur prédéfinie ou en saturant le résultat de cette intégrale, de manière à obtenir un résultat compris entre zéro (0) et un (1). On notera que la valeur moyenne utilisée dans l'intégrale peut avoir été préalablement pondérée par un coefficient de sensibilité par les moyens de traitement MT.

La valeur moyenne, éventuellement pondérée, est utilisée dans l'intégrale pour donner une variation (elle sert de pente).

Une valeur d'indicateur d'état IE égale à zéro (0) correspond par exemple à une portion de voie de circulation VC en très bon état, tandis qu'une valeur d'indicateur d'état IE égale à un (1) correspond par exemple à une portion de voie de circulation VC en mauvais état. Cette intégrale optionnelle est destinée à assurer un effet « d'historique ». Le nombre choisi de fréquences prépondérantes fₚ utilisées dans l'intégrale est au moins égal à deux (2).

On notera que le résultat de la saturation du résultat de l'intégrale peut être ensuite filtré, par exemple avec un filtre de type passe-bas, afin de lisser l'allure de l'indicateur d'état IE et ainsi permettre d'adapter la dynamique de ses variations.

On a schématiquement illustré dans le diagramme de la figure 3, l'évolution temporelle (t) de l'indicateur d'état IE obtenu par le dispositif d'analyse DA en présence des exemples de déplacement C1 à C4 de la figure 2. Le début de la courbe à l'instant t = 0 correspond à une situation de type mauvaise route avec un coefficient élevé. Comme on peut l'observer en comparant les courbes des figures 2 à la courbe de la figure 3, entre les instants t = 0 s et t = 1,49 s il existe des variations de débattement relativement importantes mais selon des fréquences basses à intermédiaires (on est ici entre 0,5 Hz et 2,5 Hz). On voit ici que la valeur de l'indicateur d'état IE décroit très rapidement dès détection de la fréquence principale fₚ (la basse fréquence correspond au mode de caisse), ce qui est caractéristique d'une portion de voie de circulation faiblement à modérément dégradée et sollicitante en basse fréquence. Puis, entre les instants t = 1,5 s et t = 1,9 s il existe des variations de débattement selon des hautes fréquences, et donc la valeur de l'indicateur d'état IE croit ce qui est caractéristique d'une portion de voie de circulation dégradée. Ensuite, entre les instants t = 2 s et t = 5 s il existe des variations de débattement très faibles selon des basses fréquences, et donc la valeur de l'indicateur d'état IE décroit ce qui est caractéristique d'une portion de voie de circulation en très bon état (revêtement neuf et quasi plan).

Il est important de noter que l'invention peut être également considérée sous l'angle d'un procédé d'analyse pouvant être notamment mis en oeuvre au moyen d'un dispositif d'analyse DA du type de celui présenté ci-avant. Les fonctionnalités offertes par la mise en oeuvre du procédé selon l'invention étant identiques à celles offertes par le dispositif d'analyse DA présenté ci-avant, seule la combinaison de fonctionnalités principales offerte par le procédé est présentée ci-après.

Ce procédé d'analyse comprend des première et seconde étapes. Dans la première étape, on (les moyens de traitement MT) estime(nt) une fréquence prépondérante fₚ dans des signaux Z(t) qui sont représentatifs d'excitations de la structure du véhicule terrestre VT à des instants t. Dans une seconde étape, on (les moyens de traitement MT) détermine(nt) une valeur d'un indicateur IE qui est représentatif d'un état de la voie de circulation VC (sur laquelle circule le véhicule terrestre VT) en fonction d'au moins la fréquence prépondérante fₚ estimée lors de la première étape.

L'indicateur d'état IE, qui est déterminé par le dispositif d'analyse DA, est précis (du fait qu'il est effectivement représentatif de l'état de la voie de circulation et permet de différencier tous ces différents types) et réactif (du fait qu'il évolue avec les variations de l'état de la voie de circulation). En outre, cet indicateur d'état IE est simple non seulement dans son format, mais également dans son utilisation, ce qui permet de l'estimer en temps réel (éventuellement de façon très légèrement anticipée) avec des ressources de calcul limitées.

Grâce à cet indicateur d'état IE, il est désormais possible d'adapter le niveau d'effort demandé par chacune des fonctions de la suspension pour améliorer le compromis entre la tenue de la structure de support de passager(s) (ici une caisse), à savoir plus d'amortissement, et le filtrage de la suspension, à savoir moins d'amortissement.

## Revendications

1. Dispositif d'analyse (DA) pour un véhicule terrestre (VT) propre à circuler sur une voie de circulation (VC) et comprenant une structure de support de passager(s), **caractérisé en ce qu'**il comprend des moyens de traitement (MT) agencés pour estimer au moins une fréquence prépondérante fₚ dans au moins un signal Z(t) représentatif d'excitations de ladite structure à un instant t, puis pour déterminer une valeur d'un indicateur représentatif d'un état de ladite voie de circulation (VC) en fonction d'au moins ladite fréquence prépondérante fₚ estimée et **en ce que** lesdits moyens de traitement (MT) sont agencés pour assimiler chaque signal Z(t) associé à un instant t à une fonction égale au produit d'une amplitude par une sinusoïde mono-fréquentielle ayant une variable égale au produit dudit instant t par une pulsation ω proportionnelle à une fréquence prépondérante fₚ, et pour déterminer la pulsation ω de chaque signal Z(t) en calculant la racine carrée du module d'un rapport entre une dérivée seconde dudit signal Z(t) par rapport au temps et ledit signal Z(t).

2. Dispositif selon la revendication 1, **caractérisé en ce que** lesdits moyens de traitement (MT) sont agencés, d'une première part, pour associer à chaque fréquence prépondérante fₚ estimée pour un instant t un coefficient ayant une valeur fonction de son positionnement par rapport à au moins deux seuils prédéfinis, parmi lesquels un premier seuil est égal à une haute fréquence et un deuxième seuil est strictement inférieur audit premier seuil et égal à une basse fréquence, d'une deuxième part, pour calculer une valeur moyenne de valeurs de coefficient associées à chaque fréquence prépondérante fₚ associée à cet instant t, et, d'une troisième part, pour déterminer ladite valeur de l'indicateur associée à un instant t en calculant une intégrale de cette valeur moyenne, puis en normalisant le résultat de cette intégrale par une valeur prédéfinie ou en saturant le résultat de cette intégrale, de manière à obtenir un résultat compris entre zéro et un.

3. Dispositif selon la revendication 2, **caractérisé en ce que** lesdits moyens de traitement (MT) sont agencés pour déterminer ladite valeur de l'indicateur associée à un instant t en pondérant ladite valeur moyenne par un coefficient de sensibilité, puis en calculant une intégrale de cette valeur moyenne pondérée par ledit coefficient de sensibilité.

4. Dispositif selon l'une des revendications 2 et 3, **caractérisé en ce que** lesdits moyens de traitement (MT) sont agencés pour associer une première valeur de coefficient positive choisie à chaque fréquence prépondérante fₚ estimée et supérieure audit premier seuil, une deuxième valeur de coefficient négative choisie à chaque fréquence prépondérante fₚ estimée et comprise entre lesdits deuxième et premier seuils, et une troisième valeur de coefficient négative choisie, strictement inférieure à ladite deuxième valeur négative choisie, à chaque fréquence prépondérante fₚ estimée et inférieure audit deuxième seuil.

5. Dispositif selon l'une des revendications 1 à 4, **caractérisé en ce que** lesdits signaux Z(t) sont choisis dans un groupe comprenant des premiers signaux représentatifs d'un profil de ladite voie de circulation (VC) et acquis dans une zone (ZV) située devant ledit véhicule terrestre (VT), des deuxièmes signaux représentatifs d'un débattement d'un endroit choisi d'au moins une roue dudit véhicule terrestre (VT), et des troisièmes signaux représentatifs d'un débattement d'au moins une suspension associée à une roue dudit véhicule terrestre (VT).

6. Dispositif selon la revendication 5, **caractérisé en ce que** lesdits moyens de traitement (MT) sont agencés pour déduire lesdits deuxièmes signaux soit desdits premiers signaux, soit de signaux primaires acquis par des deuxièmes moyens d'acquisition que comprend ledit véhicule terrestre (VT).

7. Dispositif selon l'une des revendications 5 et 6, **caractérisé en ce que** lesdits moyens de traitement (MT) sont agencés pour déduire lesdits troisièmes signaux soit desdits premiers signaux, soit de signaux primaires acquis par des troisièmes moyens d'acquisition que comprend ledit véhicule terrestre (VT).

8. Véhicule terrestre (VT) propre à circuler sur une voie de circulation (VC) et comprenant une structure de support de passager(s), **caractérisé en ce qu'**il comprend en outre un dispositif d'analyse (DA) selon l'une des revendications précédentes.

9. Véhicule selon la revendication 8, **caractérisé en ce qu'**il est de type automobile.

## Patentansprüche

1. Vorrichtung zur Analyse (DA) für ein Landfahrzeug (VT), das geeignet ist, um auf einem Verkehrsweg (VC) zu fahren und umfassend eine Passagierhaltestruktur, **dadurch gekennzeichnet, dass** sie Verarbeitungsmittel (MT) umfasst, die angeordnet sind, um mindestens eine maßgebliche Frequenz fₚ in mindestens einem Signal Z(t) zu schätzen, das repräsentativ für Erregungen der Struktur an einem Zeitpunkt t ist, außerdem um einen Wert eines Indikators zu bestimmen, der für einen Zustand des Verkehrswegs (VC) in Abhängigkeit mit mindestens der geschätzten maßgeblichen Frequenz fₚ repräsentativ ist, und dadurch, dass die Verarbeitungsmittel (MT) angeordnet sind, um jedes Signal Z(t), das mit einem Zeitpunkt t verknüpft ist, mit einer Funktion zu assimilieren, die gleich einem Produkt einer Amplitude mit einer monofrequenten Sinuskurve ist, die eine Variable aufweist, die gleich dem Produkt des Zeitpunkts t mit einem Pulsieren ω ist, das proportional zu einer maßgeblichen Frequenz fₚ ist, und um das Pulsieren ω jedes Signals Z(t) durch Berechnen der Quadratwurzel des Moduls eines Verhältnisses zwischen einer zweiten Ableitung des Signals Z(t) im Verhältnis zur Zeit und dem Signal Z(t) zu bestimmen.

2. Vorrichtung nach Anspruch 1, **dadurch gekennzeichnet, dass** die Verarbeitungsmittel (MT) erstens angeordnet sind, um mit jeder maßgeblichen Frequenz fₚ, die für einen Zeitpunkt t geschätzt wird, einen Koeffizienten zu verknüpfen, der einen Wert aufweist, der abhängt von seiner Positionierung im Verhältnis zu mindestens zwei vorbestimmten Schwellen, unter denen eine erste Schwelle gleich einer hohen Frequenz ist und eine zweite Schwelle grundsätzlich kleiner als die erste Schwelle und gleich einer niedrigen Frequenz ist, zweitens, um einen Mittelwert von Werten von Koeffizienten zu berechnen, die mit jeder maßgeblichen Frequenz fₚ verknüpft sind, die mit diesem Zeitpunkt t verknüpft ist, und, drittens, um den Wert des Indikators zu bestimmen, der mit einem Zeitpunkt t verknüpft ist, durch Berechnen eines Integrals dieses Mittelwerts, außerdem durch Normalisieren des Ergebnisses dieses Integrals durch einen vorbestimmten Wert oder durch Sättigen des Ergebnisses dieses Integrals, um so ein Ergebnis zu erhalten, das zwischen Null und Eins liegt.

3. Vorrichtung nach Anspruch 2, **dadurch gekennzeichnet, dass** die Verarbeitungsmittel (MT) angeordnet sind, um den Wert des Indikators zu bestimmen, der mit einem Zeitpunkt t verknüpft ist, durch Gewichten des Mittelwerts mit einem Empfindlichkeitskoeffizienten, außerdem durch Berechnen eines Integrals dieses Mittelwerts mit dem Empfindlichkeitskoeffizienten.

4. Vorrichtung nach einem der Ansprüche 2 und 3, **dadurch gekennzeichnet, dass** die Verarbeitungsmittel (MT) angeordnet sind, um einen ersten ausgewählten positiven Koeffizientenwert mit jeder maßgeblichen Frequenz fₚ, die geschätzt und größer als die erste Schwelle ist, einen zweiten ausgewählten negativen Koeffizientenwert mit jeder maßgeblichen Frequenz fₚ, die geschätzt ist und zwischen den zweiten und ersten Schwellen liegt, und einen dritten ausgewählten negativen Koeffizientenwert, der grundsätzlich kleiner als der zweite ausgewählte negative Wert ist, mit jeder maßgeblichen Frequenz fₚ zu verknüpfen, die geschätzt und kleiner als die zweite Schwelle ist.

5. Vorrichtung nach einem der Ansprüche 1 bis 4, **dadurch gekennzeichnet, dass** die Signale Z(t) ausgewählt sind aus einer Gruppe, umfassend erste Signale, die für ein Profil des Verkehrswegs (VC) repräsentativ sind und in einer Zone (ZV) erfasst werden, die sich vor dem Landfahrzeug (VT) befindet, zweite Signale, die für einen Federweg einer Stelle repräsentativ sind, die ausgewählt ist aus mindestens einem Rad des Landfahrzeugs (VT), und dritte Signale, die für einen Federweg mindestens einer Aufhängung repräsentativ sind, die mit einem Rad des Landfahrzeugs (VT) verknüpft ist.

6. Vorrichtung nach Anspruch 5, **dadurch gekennzeichnet, dass** die Verarbeitungsmittel (MT) angeordnet sind, um die zweiten Signale entweder von den ersten Signalen oder von primären Signalen herzuleiten, die durch zweite Erfassungsmittel erfasst werden, die das Landfahrzeug (VT) umfasst.

7. Vorrichtung nach einem der Ansprüche 5 und 6, **dadurch gekennzeichnet, dass** die Verarbeitungsmittel (MT) angeordnet sind, um die dritten Signale entweder von den ersten Signalen oder von primären Signalen herzuleiten, die durch dritte Erfassungsmittel erfasst werden, die das Landfahrzeug (VT) umfasst.

8. Landfahrzeug (VT), das geeignet ist, um auf einem Verkehrsweg (VC) zu fahren und umfassend eine Passagierhaltestruktur, **dadurch gekennzeichnet, dass** es weiter eine Vorrichtung zur Analyse (DA) nach einem der vorstehenden Ansprüche umfasst.

9. Fahrzeug nach Anspruch 8, **dadurch gekennzeichnet, dass** es vom Kraftfahrzeugtyp ist.

## Claims

1. Analysis device (DA) for a land vehicle (VT) able to travel on a traffic route (VC) and comprising a structure for supporting one or more passengers, **characterised in that** it comprises processing means (MT) arranged to estimate at least one dominant frequency fₚ in at least one signal Z(t) representing excitations of said structure at a time t, then to determine a value of an indicator representing the state of said traffic route (VC) in accordance with at least said estimated dominant frequency fₚ and **in that** said processing means (MT) are arranged to assimilate each associated signal Z(t) at a time t with a function equal to the product of an amplitude by a single-frequency sinusoid having a variable equal to the product of said time t by a pulse w proportional to a dominant frequency fₚ, and to determine the pulse w of each signal Z(t) by calculating the square root of the modulus of a ratio between a second derivative of said signal Z(t) with respect to the time and said signal Z(t).

2. Device according to claim 1, **characterised in that** said processing means (MT) are arranged, firstly, to associate with each estimated dominant frequency fₚ for a time t a coefficient having a value as a function of its positioning with respect to at least two predefined thresholds, among which a first threshold is equal to a high frequency and a second threshold is strictly less than said first threshold and equal to a low frequency, secondly, to calculate an average value of the coefficient values associated with each dominant frequency fₚ associated with this time t, and, thirdly, to determine said value of the indicator associated with a time t by calculating an integral of this average value, then by standardising the result of this integral by a predefined value or by saturating the result of this integral, in such a way as to obtain a result between zero and one.

3. Device according to claim 2, **characterised in that** said processing means (MT) are arranged to determine said value of the indicator associate with a time t by weighting said average value by a sensitivity coefficient, then by calculating an integral of this average weighted value by said sensitivity coefficient.

4. Device according to one of claims 2 and 3, **characterised in that** said processing means (MT) are arranged to associate a first positive coefficient value chosen at each estimated dominant frequency fₚ and greater than said first threshold, a second negative coefficient value chosen at each estimated dominant frequency fₚ and between said second and first thresholds, and a chosen third negative coefficient value, strictly less than said second chosen negative value, at each estimated dominant frequency fₚ and less than said second threshold.

5. Device according to one of claims 1 to 4, **characterised in that** said signals Z(t) are chosen from the group comprising first signals representing a profile of said traffic route (VC) and acquired in a zone (ZV) located in front of said land vehicle (VT), second signals representing a movement of a location of a location chosen from at least one wheel of said land vehicle (VT), and third signals representing a movement of at least one suspension associated with a wheel of said land vehicle (VT).

6. Device according to claim 5, **characterised in that** said processing means (MT) are arranged to deduce said second signals either from said first signals, or from first signals acquired by second acquisition means that comprise said land vehicle (VT).

7. Device according to one of claims 5 and 6, **characterised in that** said processing means (MT) are arranged to deduce said third signals either from said first signals, or from first signals acquired by third acquisition means that comprise said land vehicle (VT).

8. Land vehicle (VT) able to travel on a traffic route (VC) and comprising a structure for supporting one or more passengers, **characterised in that** it further comprises an analysis device (DA) according to one of the preceding claims.

9. Vehicle according to claim 8, **characterised in that** it is of the automobile type.
